# EUROPÄISCHE PATENTSCHRIFT

(11) **EP 2 578 917 B1**
(45) Veröffentlichungstag und Bekanntmachung des Hinweises auf die Patenterteilung: **12.12.2018**
(21) Anmeldenummer: 12186757.6
(22) Anmeldetag: 01.10.2012
(51) Int. Cl.: H02G 3/22, F16L 5/08, F16L 25/00

(54) **Dichtungsvorrichtung für Wellrohre**
Sealing device for corrugated pipes
Dispositif d'étanchéité pour tube ondulé

(30) Priorität: 07.10.2011 DE 202011106504 U
(43) Veröffentlichungstag der Anmeldung: 10.04.2013
(73) Patentinhaber: UGA System-Technik GmbH & Co. KG, 89542 Herbrechtingen (DE)
(72) Erfinder: Gauland, Gerhard, 89520 Heidenheim (DE)
(74) Vertreter: Eisenführ Speiser

(56) Entgegenhaltungen:
- EP-A1- 0 545 410
- DE-A1- 3 442 074
- DE-C1- 3 917 453
- DE-U1- 8 102 006
- DE-U1- 20 301 210
- DE-U1- 29 703 964

## Beschreibung

Die Erfindung betrifft eine Dichtungsvorrichtung zum Abdichten eines Wellrohrs gegenüber einem Durchbruch in einer Wand mit mindestens zwei Dichtungskörpern, wobei jeder der Dichtungskörper an Rippen des Wellrohrs anliegt, und zwei Spannelementen zum axialen Verpressen der Dichtungskörper, wobei ein verpressungsresistentes Stützelement zwischen den Dichtungskörpern angeordnet ist und den Kontakt zwischen den Dichtungskörpern im Wesentlichen unterbindet.

Im Bereich des Gebäudebaus werden eine Vielzahl von Medienleitungen verlegt, über die das Gebäude mit üblichen Medien versorgt wird, wie zum Beispiel Wasser, Strom, Elektrizität und Telekommunikationsanschlüssen. Die Medienleitungen werden üblicherweise mit Schutzrohren ummantelt, um sie vor äußeren Einflüssen, wie beispielsweise Feuchtigkeit, Schmutz, Stößen und dergleichen abzuschirmen. Zum Durchführen der Medienleitungen und des Schutzrohrs wird ein Durchbruch bzw. eine Laibung in einer Wand ausgebildet, dessen Durchmesser größer ist als der der Medienleitung. Die Dichtungsvorrichtung dient zur Abdichtung des Zwischenraums zwischen dem Schutzrohr und dem Durchbruch.

Als Schutzrohre kommen regelmäßig Wellrohre zum Einsatz, die aufgrund der geringen Wandstärke günstige Materialkosten in der Herstellung aufweisen. Jedoch hat dies den Nachteil, dass das Wellrohr gegen radial wirkende Belastungen, insbesondere Druckbelastungen, anfällig ist. Zu große radiale Belastungen des Wellrohrs führen zu ungewühschten Verformungen des Wellrohrs, die den Durchmesser des Wellrohrs und/oder die kreisrunde Form des Wellrohrs verändern. Weitere Verformungsformen sind Einschnürungen oder Einknicken des Wellrohrs an den Belastungsstellen.

Die Belastungen werden u. a. durch Dichtungskörper von Dichtungsvorrichtungen hervorgerufen, die an dem Wellrohr anliegen. Zum Abdichten des Wellrohrs gegenüber dem Durchbruch ist es jedoch unablässlich, dass der Dichtungskörper verpresst bzw. verstaucht wird, um eine bessere Abdichtung an den Kontaktflächen des Dichtungsköpers zu erzeugen. Bei der Verpressung dehnt sich der Dichtungskörper in radialer Richtung aus und übt an den Kontaktstellen zum Wellrohr einen radialen Druck auf das Wellrohr aus, so dass im Endzustand die Kontaktflächen des Dichtungskörpers und des Wellrohrs möglichst eng aneinander liegen und den Durchlass von Medien verhindern.

Der Dichtungskörper muss eine Länge in axialer Richtung aufweisen, um eine ausreichende abdichtende Kontaktfläche entlang des Wellrohrs herzustellen. Dieser Umstand ist mit dem Nachteil verbunden, dass sich der Dichtungskörper mit zunehmender Länge des Dichtungskörpers entlang der Längsachse unterschiedlich stark verformt. Bei der Verpressung dehnt sich der Dichtungskörper im mittleren Bereich stärker aus als an den Enden, so dass im mittleren Bereich des Dichtungskörpers ein größerer Druck auf das Wellrohr ausgeübt wird als an den Enden. Umgekehrt wird im mittleren Bereich des Dichtungskörpers eher eine Abdichtung der Kontaktflächen erreicht als an den Enden.

Für einen Anwender gestaltet es sich daher schwer, die Dichtungskörper nur soweit zu verpressen, so dass das Wellrohr nicht in einem ungewünscht hohem Maße verformt wird, aber gleichzeitig eine ausreichende Dichtungswirkung zwischen der Dichtungsvorrichtung und dem Wellrohr hergestellt wird. Besonders kritisch ist hierbei, wenn das Wellrohr derart verformt wird, so dass es beschädigt und dadurch undicht wird.

Die Patentschrift DE 103 07 563 B3 offenbart eine Hauseinführungskombination, bei der in den Hohlräumen zwischen einem Wellrohr und einem Dichtungskörper Stützkörper eingesetzt werden, um zusätzliche Kontaktflächen zwischen dem Wellrohr und den Dichtungskörpern herzustellen. Zwar vergrößert sich auf dieser Fläche die Anzahl der Kontaktflächen zwischen dem Wellrohr und dem Dichtungskörper, so dass bei der Verstauchung des Dichtungskörpers eine verbesserte Druckverteilung erreicht wird. Aufgrund der axialen Länge des Dichtungskörpers kann das ungleichmäßige Umformverhalten des Dichtungskörpers bei dieser Lösung nicht vollständig ausgeschlossen werden.

Weitere Dichtungsvorrichtungen sind aus DE 203 01 210 U1 und DE 34 42 074 A1 bekannt.

Aufgabe der Erfindung ist es daher, eine Dichtungsvorrichtung zum Abdichten eines Wellrohrs gegenüber einem Durchbruch in einer Wand aufzuzeigen, mit der eine zuverlässige Abdichtung erzeugt und das Wellrohr vor einer zu hohen Belastung geschützt werden kann.

Die Aufgabe wird gelöst durch eine Dichtungsvorrichtung mit den Merkmalen des Anspruchs 1.

Die Erfindung basiert auf dem Gedanken, dass das verstauchungsresistente Stützelement es ermöglicht, die axiale Länge eines einzelnen Dichtungskörpers gering zu halten, ohne dabei die gesamte Dichtungsfläche bzw. Kontaktfläche zwischen der Dichtungsvorrichtung und dem Wellrohr in axialer Richtung wesentlich einzuschränken. Die an dem Wellrohr anliegende Kontaktfläche des Dichtungskörpers verformt sich in radialer Richtung dank der geringen Breite des Dichtungskörpers gleichmäßiger entlang der Längsrichtung. Des Weiteren fällt die maximale radiale Ausdehnung eines Dichtungskörpers mit kleiner Breite auch geringer aus als bei einem wesentlich längeren Dichtungskörper bei vergleichbarer Belastung. Das Risiko, das ein Anwender aus Versehen eine zu große Verpressung der Dichtungskörper vornimmt, wird auf diese Weise deutlich reduziert.

Das verpressungsresistente Stützelement unterbindet den unmittelbaren Kontakt zwischen den Dichtungskörpern im Wesentlichen, so dass das die Dichtungskörper insbesondere im Bereich um das Wellrohr herum durch das Stützelement abgestützt werden. Das Stützelement bildet somit eine Art Zwischenstütze bzw. Zwischenlager zu den Spannelementen.

Das Stützelement weist hierzu eine mechanische Festigkeit auf, sodass es trotz der Belastung durch die axiale Verpressung der Dichtungskörper im Wesentlichen nicht verformt wird (verpressungsresistent). Die mechanische Festigkeit des Stützelements wird mittels der Formgebung des Stützelements und / oder der verwendeten Materialen zum Herstellen des Stützelements erreicht.

Die Dichtungskörper sind im Bereich der Kontaktfläche zu dem Wellrohr im Wesentlichen ebenförmig ausgebildet und erstrecken sich in axialer Richtung in einem Maß, sodass die Dichtungskörper an mindestens zwei Rippen des Wellrohrs anliegen, um ein stabilies Anliegen der Dichtungskörper an dem Wellrohr sicherstellen zu können. Die Kontaktflä che des Dichtungskörpers verläuft auf diese Weise im Wesentlichen parallel zur Längsachse des Wellrohrs. Die Rippen des Wellrohrs können dabei sinusförmig als auch rechteckig ausgebildet sein.

Erfindungsgemäß ist das Stützelement zwischen zwei Rippen des Wellrohrs anordenbar. Der Zwischenraum zwischen den Rippen wird mittels des Stützelements besetzt, sodass der Bewegungsraum zum Verschieben oder Verformen der Rippen des Wellrohrs beschränkt wird, die zu dem Stützelement benachbart sind. Die Verformung des Wellrohrs im Bereich der Dichtungsvorrichtung wird auf diese Weise im erheblichen Umfang eingeschränkt.

Ferner ist eine Weiterbildung der erfindungsgemäßen Dichtungsvorrichtung bevorzugt, bei dem das Stützelement eine Ausnehmung zum Durchführen des Wellrohrs aufweist, wobei der Durchmesser der Ausnehmung im Wesentlichen dem Innendurchmesser des Wellrohrs entspricht. Das Stützelement liegt gemäß dieser Ausführungsform unmittelbar an der Innenumfangsfläche des Wellrohrs zwischen zwei Rippen an und wirkt in der Art einer stabilen Einfassung. Elastische Verformungen des Wellrohrs im Bereich des Stützelements werden auf diese Weise wirksam blockiert. Ferner wirkt das Stützelement gemäß dieser Ausführungsform im in einem Durchbruch eingebauten Zustand entgegen einer axiale Verschiebung des Wellrohrs.

Besonders bevorzugt und vorteilhaft ist hierbei eine Weiterbildung der erfindungsgemäßen Dichtungsvorrichtung, bei der das Stützelement derart ausgebildet ist, um einen Zwischenraum zwischen zwei Rippen des Wellrohrs im Wesentlichen vollständig auszufüllen. Mittels dieser Ausführungsform wirkt das Stützelement einer Verformung der benachbarten Rippen des Wellrohrs entgegen und erreicht auf diese Weise einen besonders guten Schutz des Wellrohrs vor einer ungewünschten Verformung, insbesondere Einschnürung oder Einknickung. Das Stützelement ist dabei an die Form des Zwischenraums zwischen den Rippen des Wellrohrs angepasst ausgebildet. Das Stützelement füllt dabei den Zwischenraum soweit aus, sodass ein Kontakt zwischen dem Stützelement und den Rippen zum Aufnehmen axialer als auch radialer Kräfte hergestellt wird. Auf die zu dem Stützelement benachbarten Rippen wirkende Kräfte werden unmittelbar auf das Stützelement übertragen, das eine Reaktionskraft aufbringen kann ohne selbst verformt zu werden. Das Stützelement stützt die Rippen auf die Weise ab bevor eine Verformung der Rippen eintritt. Die Ausführungsform umfasst dabei auch solche Stützelemente, die an einigen Stellen des Umfangs mit Aussparungen versehen sind.

Bevorzugterweise wird die erfindungsgemäße Dichtungsvorrichtung mittels einer Ausführungsform weitergebildet, wonach der Dichtungskörper und das Stützelement ringscheibenförmig ausgebildet sind. Die Dichtungskörper und das Stützelements weisen jeweils ebene axiale Stirnflächen auf, die zur Abstützung der Dichtungskörper besonders vorteilhaft sind und eine möglichst gleichmäßige Verteilung der axialen Druckbelastung über die Kontakflächen zueinander ermöglchen. Ferner ermöglicht die Ausführungsform eine besonders einfache Herstellung der Teile, einen besonders einfachen Einbau in einen Durchbruch sowie eine kompakte Bauweise der Dichtungsvorrichtung. Die Montage der Dichtungsvorrichtung erfordert lediglich eine parallele Anordnung der Dichtungskörper und des Stützelements zueinander.

Gemäß einer weiteren vorteilhaften Ausführungsform der erfindungsgemäßen Dichtungsvorrichtung ist das Stützelement aus mehreren werkzeugfrei montierbaren Scheibensegmenten ausgebildet. Beim Einbau des Stützelements auf das Wellrohr kann ein Anwender die Scheibensegmente des Stützelements an jeder beliebiger Stelle entlang der Längsachse des Wellrohrs anlegen und zusammenbauen. Insbesondere bei einer Ausführungsform, bei der das Stützelement direkt am Innendurchmesser des Wellrohrs anliegt, ermöglicht diese Ausführungsform eine besonders variable und schnelle Montage des Stützelements. Ferner kann der Durchmesser des Stützelements über die Anzahl der Scheibensegmente an den Durchmesser des Wellrohrs angepasst werden. Vorteilhafter Weise sind die Scheibensegmente formschlüssig miteinander verbunden, sodass die Scheibensegmente beliebig oft miteinander verbunden und voneinander gelöst werden können.

Weiterhin ist eine erfindungsgemäße Dichtungsvorrichtung gemäß einer Ausführungsform vorteilhaft, bei dem das Stützelement eine Breite im Bereich von 2 mm bis 8 mm, bevorzugt eine Breite von 4 mm, aufweist. Ein Stützelement eignet sich besonders gut für den gedachten Einsatz der Dichtungsvorrichtungen eingangs genannter Art. Ferner ist ein Stützelement mit diesen Dimensionen in axialer Richtung für eine Vielzahl von gängigen Wellrohren mit unterschiedlichen Durchmessern und/oder Wellenprofilen verwendbar, insbesondere mit solchen, die sich für den Zweck eingangs genannter Art eignen. Besonders vorteilhaft ist dabei ein Stützelement mit einer Breite von 4 mm, dass sowohl für die variable Einsetzbarkeit, Festigkeit mit einer Vielzahl von Materialien sowie Herstellungskosten einen guten Kompromiss bildet. Unter der Breite ist hierbei die Dicke bzw. Stärke des Stützelements zu verstehen und ist aus dem maximalen Abstand zwischen zwei Punkten an axialen Außenflächen des Dichtungskörpers zu ermitteln, wobei die Verbindungslinie zwischen den zwei Punkten parallel zur Längsachse des Dichtungskörpers verläuft.

Vorteilhaft ist des Weiteren eine Ausführungsform der erfindungsgemäßen Dichtungsvorrichtung, wonach das Material des Stützelements Stahl oder Edelstahl ist. Stahl umfasst dabei sämtliche Stahlsorten, die im Handel unter der einfachen Bezeichnung Stahl geführt werden. Die Materialien erlauben eine besonders hohe mechanische Festigkeit des Stützelements sowie eine einfache Herstellbarkeit. Insbesondere in Kombination mit einem Stützelement bei einer Breite im Bereich von 2 mm bis 8 mm wird eine ausreichende mechanische Festigkeit für den erfindungsgemäßen Einsatz erreicht. Die korrosionsbeständigen Eigenschaften des Edelstahls, wie z. B. Rostfreiheit, sind zudem beim Einsatz der Dichtungsvorrichtungen der eingangs genannten Art besonders vorteilhaft.

Des Weiteren ist eine Ausführungsform der erfindungsgemäßen Dichtungsvorrichtung vorteilhaft, bei dem die Dichtungskörper eine Breite im Bereich von 20 mm bis 80 mm, bevorzugt eine Breite von 40 mm, aufweisen. Dichtungskörper mit diesen Abmessungen sind für den Einsatz der Dichtungsvorrichtung in dem eingangs genannten Anwendungsbereich besonders gut geeignet und korrespondieren gut mit den Wellrohen. Insbesondere ein Dichtungskörper mit einer Breite von 40 mm bietet einen guten Kompromiss zwischen einer stabilen Anordnung des Dichtungskörpers an den Rippen des Wellrohrs, einer gleichmäßigen radialen Verformung des Dichtungskörpers beim axialen Verpressen mittels der Spannelemente sowie eine ausreichenden Dichtungsfläche zwischen dem Wellrohr und dem Dichtungskörper.

Vorteilhafterweise wird die erfindungsgemäße Dichtungsvorrichtung dadurch weitergebildet, dass die Dichtungskörper ein Material aus der Gruppe der Elastomere, insbesondere Gummi, EPDM, TPE und / oder PU enthalten. Die Dichtungskörper gemäß dieser Ausführungsform eignen sich aufgrund ihrer Verformungseigenschaften und Beständigkeit besonders gut für den Einsatz als Dichtungskörper im eingangs genannten Bereich. Vorteilhaft ist zudem die einfache Herstellbarkeit beziehungsweise Verarbeitbarkeit dieser Materialien. Die Dichtungskörper können aus einem einzigen der vorgenannten Materialen sowie aus einer Mischung der Materialen hergestellt werden. Vorteilhaft sind insbesondere solche Materialien oder Zusammensetzungen, die mittels einer thermoplastischen Verformung herstellbar sind.

Nach einer weiteren vorteilhaften Ausführungsform der erfindungsgemäßen Dichtungsvorrichtung sind die Spannelemente aus mehreren Ringsegmenten ausgebildet. Denkbar ist sowohl die Montage der Spannelemente ab Werk oder vor Ort. Der Durchmesser eines Spannelements kann dabei durch die Anzahl der Ringsegmente variiert werden. Vorteilhafterweise sind die Ringsegmente kettenartig miteinander verbunden und können relativ zueinander bewegt werden. Eine Anpassung der Anordnung der Ringsegmente relativ zueinander erleichtert damit den Einbau der Dichtungsvorrichtung in einem Durchbruch.

Vorteilhafterweise wird die erfindungsgemäße Dichtungsvorrichtung dadurch weitergebildet, dass das erste der Spannelemente mit mehreren sich axial erstreckenden Verbindungstäben und das zweite der Spannelemente, die Dichtungskörper und das Stützelement mit dazu korrespondierenden Bohrungen versehen ist. Die Verbindungsstäbe des ersten der Spannelemente werden durch die Bohrungen hindurch gesteckt, um die Teile miteinander zu koppeln. Die Dichtungsvorrichtung ist auf diese Weise besonders einfach und fehlerfrei montierbar.

Ferner weist eine vorteilhafte Ausführungsform der erfindungsgemäßen Dichtungsvorrichtung Dichtungskörper auf, die mittels einer Druckmittelzufuhr verpressbar sind. Zum Verpressen der Dichtungskörper wird ein fließfähiges Medium mittels einer Druckquelle in die Dichtungskörper eingegeben, um die Dichtungskörper zu Verformen. Jeder Dichtungskörper ist mit einem Druckanschluss versehen, auch nach Einbau der Dichtungskörper in einem Durchbruch zugänglich ist. Vorteilhaft ist dabei der Einsatz von Druckluft.

Gemäß einer bevorzugten Ausführungsform der erfindungsgemäßen Dichtungsvorichtung sind die Verbindungsstäbe entlang des Umfangs des Spannelements gleichmäßig beabstandet zueinander angeordnet und erlauben auf diese Weise besonders viele Anordnungsmöglichkeiten der Dichtungskörper und des Stützelements relativ zum Ersten der Spannelemente.

Eine weitere bevorzugte Ausführungsform der erfindungsgemäßen Dichtungsvorrichtung weist Dichtungskörper und ein Stützelement mit einer Trennstelle auf, die in radialer Richtung aufspreizbar ausgebildet sind. Die Trennstelle erstreckt sich dabei vollständig in Längsrichtung und vom Außenumfang bis zum Innenumfang des Dichtungskörpers und des Stützelements. Die Dichtungskörper und das Stützelement sind daher an der Trennstelle aufspreizbar bzw. aufklappbar, wodurch sich die Trennstelle temporär vergrößert und das Wellrohr durch die Trennstelle hindurchschiebbar ist.

Mittels dieser Ausführungsform ist eine vorteilhafte und einfache Montage der Dichtungsvorrichtung vor Ort möglich. Die Dichtungsvorrichtung wird ab Werk vollständig zusammengebaut ausgeliefert, so dass der Zusammenbau der Einzelteile der Dichtungsvorrichtung am Einsatzort entfällt. Beim Einsatz genügt es die Dichtungsvorrichtung auf das Wellrohr mit aufgespreizten bzw. aufgeklappten Dichtungskörpern und Spannelement aufzuschieben und anschließend die Dichtungsvorrichtung in den Durchbruch zu positionieren. Abschließend werden die Dichtungskörper mittels der Spannelemente verpresst. Vorteilhafterweise ist das Stützelement mit den Dichtungskörpern derart gekoppelt, so dass das Stützelement durch das Aufspreizen eines oder beider Dichtungskörper in etwa gleichermaßen mit aufgespreizt wird.

Die Erfindung wird nachfolgend anhand eines Ausführungsbeispiels detailliert beschrieben. Es zeigen:
- Figur 1: eine perspektivische Ansicht eines ersten Ausführungsbeispiels der erfindungsgemäßen Dichtungsvorrichtung in einem montierten Zustand innerhalb eines Durchbruchs,
- Figur 2: eine Seitenansicht der Dichtungsvorrichtung gemäß dem ersten Ausführungsbeispiels in einem Durchbruch,

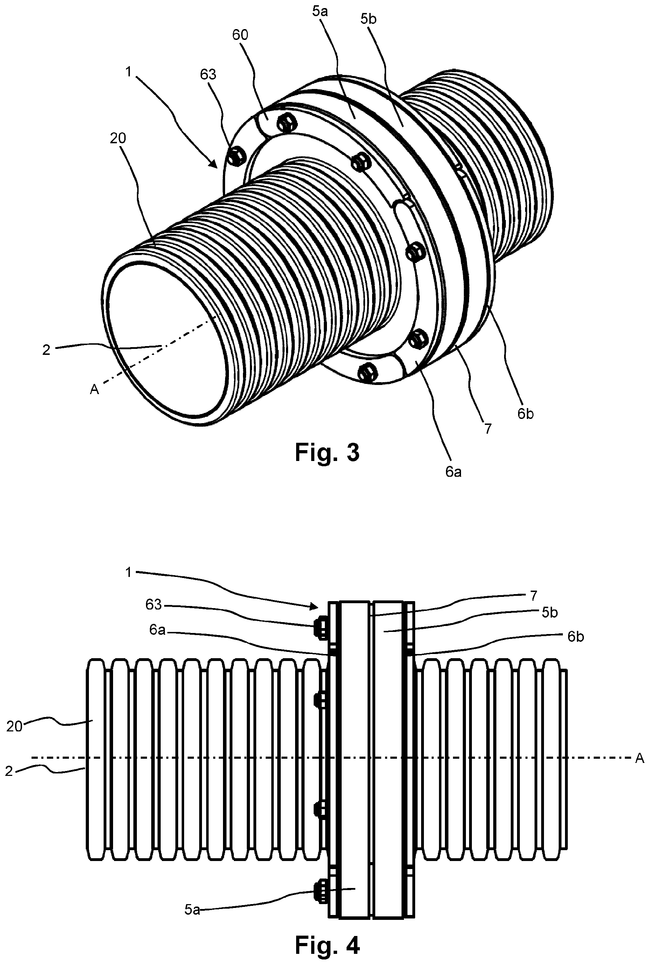

- Figur 3: eine perspektivische Ansicht der Dichtungsvorrichtung mit einem Wellrohr,
- Figur 4: eine Seitenansicht der Dichtungsvorrichtung mit einem Wellrohr,
- Figur 5: eine perspektivische Schnittansicht der Dichtungsvorrichtung mit einem Wellrohr,
- Figur 6: eine Seitenschnittansicht der Dichtungsvorrichtung mit einem Wellrohr,
- Figur 7: eine perspektivische Explosionsansicht der Dichtungsvorrichtung, und

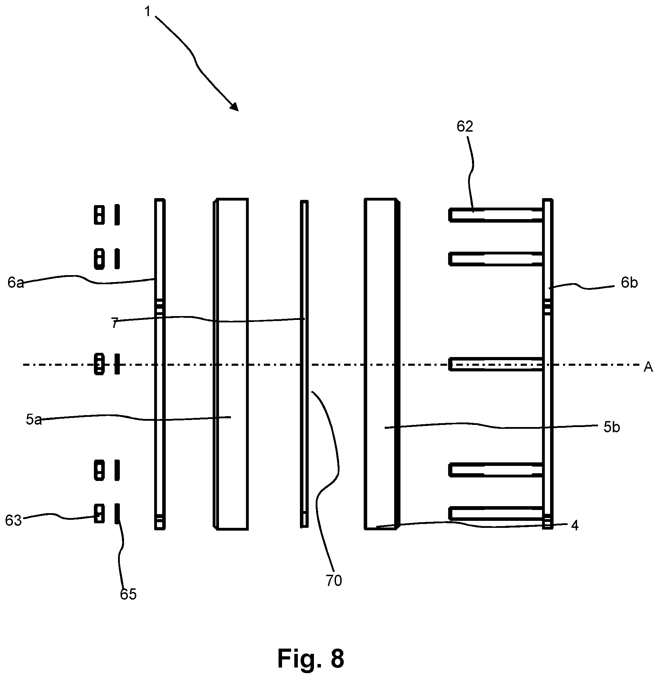

- Figur 8: eine Seiten-Explosionsansicht der Dichtungsvorrichtung.

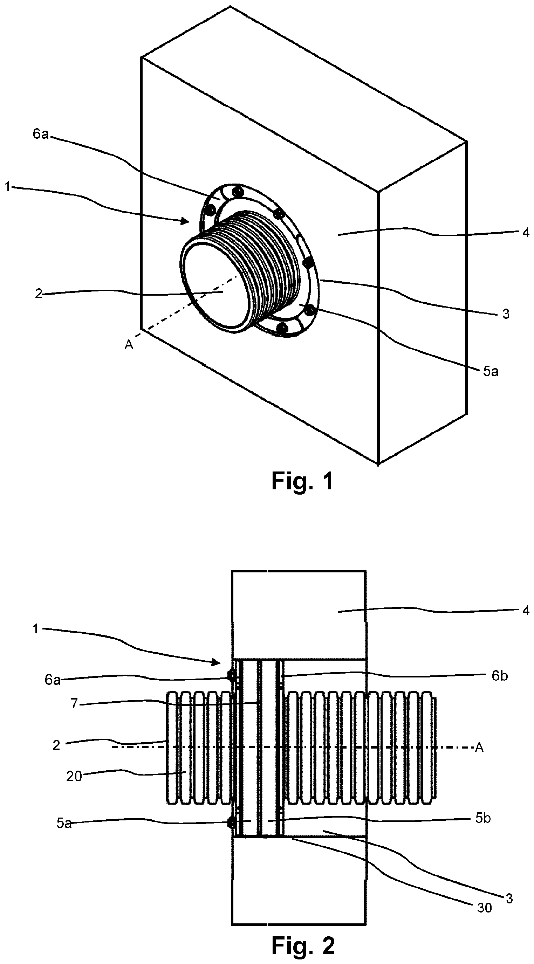

Figur 1 zeigt eine Dichtungsvorrichtung 1 zum Abdichten eines Wellrohrs 2 gegenüber einem Durchbruch 3 in einer Wand 4 mit zwei Dichtungskörpern 5a, 5b, wobei jeder der Dichtungskörper 5a, 5b an Rippen 20 des Wellrohrs 2 anliegt. Die Dichtungsvorrichtung 1 hat zwei Spannelemente 6a, 6b zum axialen Verpressen der Dichtungskörper 5a, 5b. Wie in Figur 2 weiter zu sehen, ist ein verpressungsresistentes Stützelement 7 zwischen den Dichtungskörpern 5a, 5b angeordnet und unterbindet den Kontakt zwischen den Dichtungskörpern 5a, 5b.

Der Durchbruch 3 ist als kreisförmige Ausnehmung in der Wand 4 ausgebildet und erstreckt sich in axialer Richtung entlang der Längsachse A vollständig durch die Wand 4, wie in Figur 2 zu sehen.

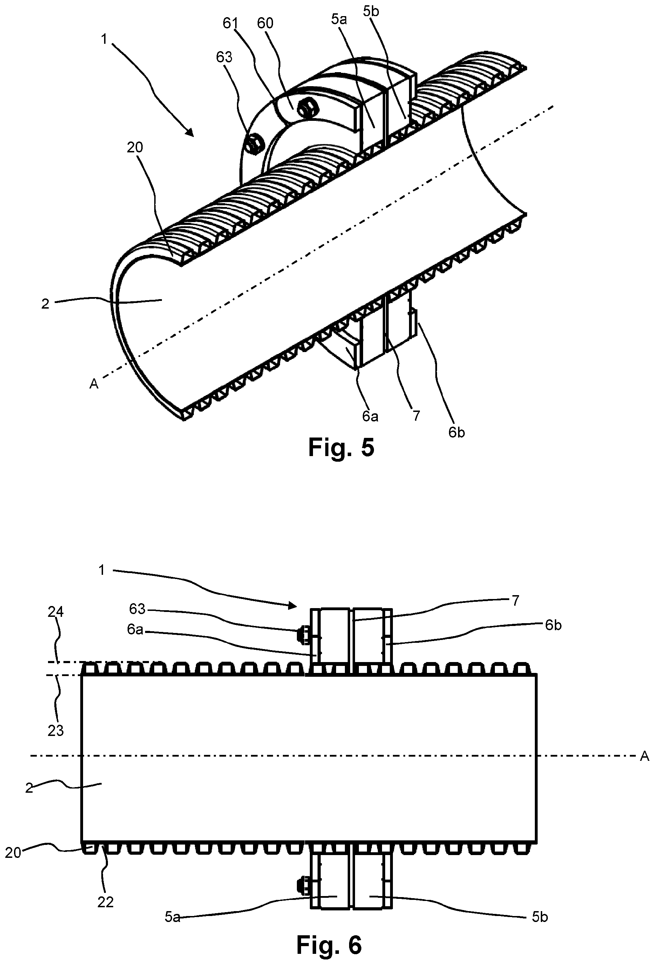

Das Wellrohr 2 ist konzentrisch zum Durchbruch 3 angeordnet und verläuft durch den Durchbruch 3 hindurch. Entlang der Längsachse A sind eine Vielzahl von Rippen 20 in gleichmäßigen Abständen zueinander angeordnet. Die Rippen 20 weisen, wie Figur 6 zu sehen, ein trapezförmiges Außenprofil auf und sind in axialer Richtung zueinander beabstandet, wodurch sich zwischen den Rippen ein Zwischenraum 22 bildet. Der Zwischenraum 22 zwischen den Rippen 20 weist ein trapezförmiges Seitenprofil auf, das sich zum Innendurchmesser 23 des Wellrohrs 2 hin verjüngt.

Die Dichtungsvorrichtung 1 weist eine im Wesentlichen zylinderförmige Grundform auf, wie in den Seitenansichten zu sehen, und ist zwischen der Umfangsfläche 30 des Durchbruchs 3 und dem Wellrohr 2 angeordnet, und zwar so, dass der Freiraum in radialer Richtung zwischen dem Wellrohr und dem Durchbruch abgedichtet wird. Auf diese Weise wird ein Austausch von Medien, wie Feuchtigkeit oder Schmutz von einer Seite auf die andere Seite der Wand 4 über den Freiraum verhindert.

Die Dichtungsvorrichtung 1 ist ferner scheibenartig aufgebaut. An den axialen Außenseiten befinden sich die Spannelemente 6a, 6b. An den Spannelementen 6a, 6b liegen die Dichtungskörper 5a, 5b an, wobei das Stützelement 7 zwischen den Dichtungskörpern angeordnet ist.

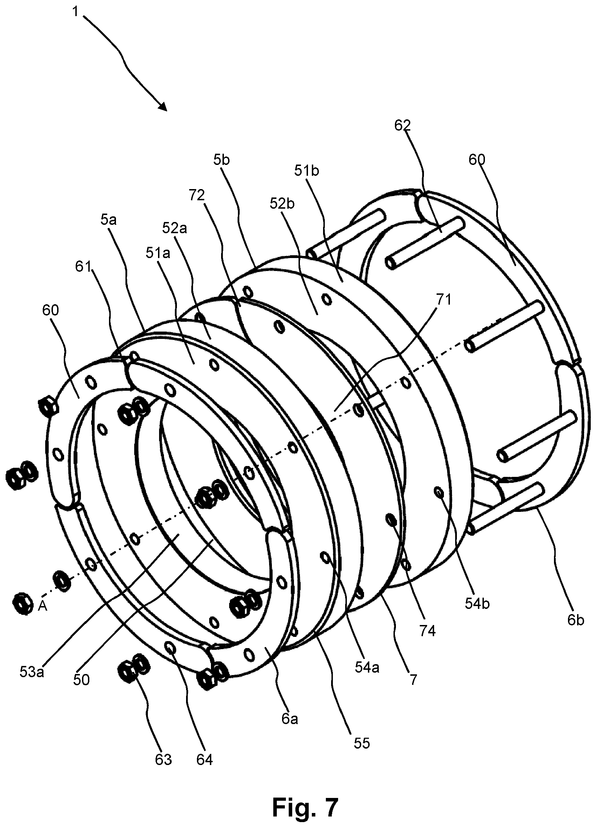

Die Spannelemente 6a, 6b sind aus mehreren Ringsegmenten 60 ausgebildet. Die Ringsegmente 60 sind formflüssig miteinander verbunden, wobei die Verbindung 61 der Ringsegmente 60 in den Figuren, zum Beispiel Figur 7, nur schemenhaft dargestellt ist. Das erste der Spannelemente 6b ist mit mehreren sich in axialer Richtung erstreckenden Verbindungsstäben 62 versehen. Die Verbindungsstäbe 62 sind entlang des Umfangs des Spannelements 6b gleichmäßig beabstandet zueinander angeordnet, wobei auf jedem Ringsegment 60 jeweils zwei Verbindungsstäbe 62 angeordnet sind. Das zweite der Spannelemente 6a, die Dichtungskörper 5a, 5b und das Stützelement 7 sind mit Bohrungen 54a, 54b, 74, 65 versehen, die zu den Verbindungsstäben 62 korrespondieren.

Zum Montieren der Dichtungsvorrichtung 1 wird zunächst der Dichtungskörper 5b auf das erste der Spannelemente 6b aufgesteckt. Auf gleiche Weise erfolgt die Montage in der Reihenfolge: Spannelement 7, Dichtungskörper 5a und das zweite Spannelement 6a. Anschließend werden die Verbindungsstäbe mit Schraubmuttern 63 und Sicherungsscheiben 65 gekoppelt, um die Dichtungskörper 1 zu verpressen. Hierzu sind die Verbindungsstäbe jeweils mit einem Gewinde versehen, die in den Figuren nicht dargestellt ist. Der Grad der axialen Verpressung der Dichtungskörper 5a, 5b wird durch das Anziehen der Schraubmuttern 63 bestimmt. Nicht in den Figuren gezeigt ist ein alternatives Ausführungsbeispiel, bei dem die Dichtungskörper mittels einer Druckmittelzufuhr verpresbar sind. Bei der Montage der Vorrichtung 1 ist es vorteilhaft die Spannelemente 6a, 6b derart zueinander auszurichten, so dass die Verbindungen 61 der Ringsegmente 60 zwischen den Spannelementen 6a, 6b nicht zueinander korrespondieren bzw. in axialer Richtung nicht deckungsgleich angeordnet sind. Auf diese Weise ist eine höhere mechanische Stabilität der Dichtungsvorrichtung 1 erreichbar.

In radialer Richtung erstrecken sich die Spannelemente 6a, 6b nur zu einem Bruchteil im Vergleich zu den axialen Stirnflächen 51a, 51b der Dichtungskörper 5a, 5b. Ferner sind die Spannelemente 6a, 6b am äußeren Rand der Dichtungskörper 5a, 5b angeordnet. Dies ermöglicht eine schwächere Verpressung der Dichtungskörper 5a, 5b im Bereich des Wellrohrs 2, so dass das Risiko einer ungewollt hohen Belastung des Wellrohrs 2 weiter verringert wird. Alternativ wären auch Spannelemente 6a, 6b denkbar, die in etwa deckungsgleich zu den der Dichtungskörpern 5a, 5b ausgebildet sind und einen über die axiale Stirnfläche gleichmäßig verteilten Verpressungsdruck ermöglichen würden.

Die Dichtungskörper 5a, 5b sind ringscheibenförmig ausgebildet und weisen eine kreisförmige Ausnehmung 50 zum Durchführen des Wellrohrs 2 auf. Der Durchmesser der Ausnehmung 50 entspricht dabei dem Außendurchmesser 24 des Wellrohrs 2. Die Breite der Dichtungskörper 5a, 5b in axialer Richtung A ist so bemessen, dass die Dichtungskörper 5a, 5b an zwei Rippen 21 des Wellrohrs 2 anliegen. In diesem Ausführungsbeispiel beträgt die Breite der Dichtungskörper 5a, 5b 40 mm. Denkbar wären jedoch auch Dichtungskörper mit Breiten im Bereich von 20 mm bis 80 mm.

Die Außenflächen der Dichtungskörper 5a, 5b sind ebenförmig ausgebildet. Dies ist sowohl für die axialen Stirnflächen 51a, 51b als auch auf die äußere 52a, 52b sowie die innere Umfangsflächen 53a, 53b zutreffend. Es ermöglicht eine möglichst große Kontaktfläche zwischen den Dichtungskörpern 5a, 5b und dem Stützelement 7 sowie zu dem Wellrohr 2. Zwischen einer axialen Stirnfläche 51a, 51b und der äußeren Umfangsfläche 52a, 52b ist eine Abrundung der Kante oder Fase 55 ausgebildet. Diese ermöglicht eine einfachere Einführung der Dichtungskörper 5a, 5b in den Durchbruch 3. Die Dichtungskörper 5a, 5b sind aus einem Material enthaltend Gummi oder EPDM hergestellt und weisen eine hohe elastische Verformbarkeit auf.

Das Stützelement 7 ist ebenso ringscheibenförmig ausgebildet und zwischen den Dichtungskörpern 5a, 5b angeordnet. Es weist eine Ausnehmung 70 zum Durchführen des Wellrohrs 2 auf, wobei der Durchmesser der Ausnehmung 70 dem Innendurchmesser 23 des Wellrohrs 2 entspricht. Wie in den Figuren 5 und 6 zu sehen ist das Stützelement 7 so ausgebildet um den Zwischenraum 22 zwischen zwei Rippen 21 des Wellrohrs 2 im Wesentlichen vollständig auszufüllen. Hierzu weist das Stützelement 7 eine Breite aus, die im Wesentlichen der Breite des Zwischenraums 22 zwischen den Rippen 20 entspricht. Desweiteren ist das Querschnittsprofil des zu den Rippen 20 benachbarte Bereichs des Stützelements 7 an die Trapezform des Zwischenraums 22 angepasst geformt.

Aufgrund des Innendurchmessers 23 der Ausnehmung 70, das kleiner ist als der Außendurchmesser 24 des Wellrohrs 2, ist ein Anwender beim Einbau der Dichtungsvorrichtung 1 dazu gezwungen, das Stützelement 7 stets zwischen zwei Rippen des Wellrohrs anzuordnen. Auf diese Weise wird die Anordnung des Stützelements 7 am Wellrohr 2 für die Montage eindeutig bestimmt, so dass das Risiko einer fehlerhaften Montage durch einen unqualifizierten Anwender vermindert wird. Zur einfacheren Montage ist das Stützelement 7 dabei aus mehreren werkzeugfreien, montierbaren Scheibensegmenten 71 ausgebildet. Die Verbindung 72 der Scheibensegmente 71 ist in den Figuren, beispielsweise Figur 7, schemenhaft dargestellt. Die Scheibensegmente 71 sind revisibel lösbar miteinander verbunden. Denkbar sind hierbei unterschiedliche Arten von Verbindungen wie zum Beispiel Klickverbindungen.

Im Verhältnis zu den Dichtungskörpern 5a, 5b weist das Stützelement 7 eine um ein vielfaches geringere Breite auf. In diesem Ausführungsbeispiel beträgt die Breite 4 mm, sie könnte jedoch auch im Bereich von 2 mm bis 8 mm liegen. Die Breite des Stützelements 7 richtet sich derweil nach der Breite des Zwischenraums 22 des verwendeten Wellrohrs 2, wobei es nicht zwingend erforderlich ist, dass das Stützelement 7 den Zwischenraum 22 vollständig ausfüllt. Ein geringer Spalt zwischen den Rippen 20 und dem Stützelement 7 beeinträchtigt die stützende Funktion des Stützelements 7 nicht wesentlich.

Das Stützelement 7 ist aus einem Material Stahl oder Edelstahl gefertigt. Das Stützelement 7 verformt sich trotz der Kräfte nicht, die üblicherweise bei der Verpressung der Dichtungskörper 5a, 5b auftreten. Ferner hält das Stützelement 7 auch axiale Belastungen stand, die durch eine Verschiebung des Wellrohrs 2 hervorgerufen werden. Auf diese Weise wird eine axiale Sicherung des Wellrohrs 2 erreicht.

Zum Abdichten des Wellrohrs (2) gegenüber dem Durchbruch 3 werden die Dichtungskörper 5a, 5b mittels der Spannelemente 6a, 6b verpresst. Hierzu kommt es zu einer Verformung der Dichtungskörper 5a, 5b in radialer Richtung, wobei die äußere Umfangsfläche 52a, 52b und die innere Umfangsfläche 53a, 53b sich radial ausdehnen. Die radiale Ausdehnung der inneren Umfangsfläche 53a der Dichtungskörper 5a, 5b hat zur Folge, dass die Dichtheit zwischen den Dichtungskörpern 5a, 5b und dem Wellrohr 2 erhöht wird. Ferner wird dadurch ein Druck in radialer Richtung auf die Rippen 21 des Wellrohrs 2 ausgeübt.

Das Stützelement 7 ermöglicht dabei statt einem Dichtungskörper dessen axiale Breite dem beider Dichtungskörper 5a, 5b entspricht, zwei schmalere Dichtungskörper 5a, 5b mit geringerer Breite zu verwenden. Dies hat den Vorteil, dass die radiale Ausdehnung der inneren Umfangsfläche 53a, 53b der Dichtungskörper 5a, 5b in Richtung der Längsachse A im Wesentlichen gleichmäßig erfolgt. Eine radiale Ausdehnung der inneren Umfangsflächen 53a, 53b mit einem Bauch im mittleren Bereich der Dichtungskörper 5a, 5b kann auf diese Weise weitestgehend verhindert werden. Die identische Breite der Dichtungskörper 5a, 5b hat zudem den Vorteil, dass die Dichtungskörper 5a, 5b sich auf ähnliche Weise verformen.

Ein Einschnüren und/oder Einknicken des Wellrohrs 2 wird zudem durch das Stützelement 7 verhindert. Die zu dem Stützelement 7 benachbarten Rippen liegen mit den Seitenflächen direkt an dem Stützelement 7 an, sodass beim Einknicken des Wellrohrs 2 die Rippen 21 sich am Stützelement 7 abstützen können und dadurch eine Gegenkraft aufbringen, die gegen die Einknickung wirken. Einer radialen elastischen Verformung des Wellrohrs wirkt das Stützelement 7 entgegen, indem es am Innenumfang 32 des Wellrohrs 2 anliegt und dadurch jegliche ungleichmäßige Verformung des Wellrohrs im Bereich des Stützelements 7 in jede Richtung blockiert.

Die Erfindung beschränkt sich nicht auf das oben beschriebene Ausführungsbeispiel. Beispielsweise wären auch Dichtungsvorrichtungen mit mehr als zwei Dichtungskörpern und mehreren Stützelementen die alternierend zueinander angeordnet sind denkbar. Ferner umfasst die Erfindung ein hier nicht gezeigtes Ausführungsbeispiel, bei der die Dichtungskörper 5a, 5b und das Stützelement 7 eine Trennstelle aufweisen und in radialer Richtung aufspreizbar ausgebildet sind.

## Patentansprüche

1. Dichtungsvorrichtung (1) zum Abdichten eines durch eine Wand (4) hindurchtretenden Wellrohrs (2) gegenüber einem Durchbruch (3) in der Wand (4) mit
mindestens zwei Dichtungskörpern (5a, 5b), wobei jeder der Dichtungskörper (5a, 5b) in einem eingebauten Zustand an Rippen (20) des Wellrohrs (3) anliegt, im Bereich der Kontaktfläche (53a, 53b) zu dem Wellrohr (2) im Wesentlichen ebenförmig ausgebildet ist und sich in axialer Richtung in einem Maß erstreckt, sodass die Dichtungskörper (5a, 5b) an mindestens zwei Rippen des Wellrohrs anliegen, und
zwei Spannelementen (6a, 6b) zum axialen Verpressen der Dichtungskörper (5a, 5b),
wobei ein verpressungsresistentes Stützelement (7) zwischen den Dichtungskörpern (5a, 5b) angeordnet ist und den Kontakt zwischen den Dichtungskörpern (5a, 5b) im Wesentlichen unterbindet, und
wobei das Stützelement (7) zwischen zwei Rippen (20) des Wellrohrs anordenbar ist.

2. Vorrichtung (1) nach Anspruch 1,
**dadurch gekennzeichnet, dass** das Stützelement (7) eine Ausnehmung zum Durchführen des Wellrohrs aufweist, wobei der Durchmesser der Ausnehmung im Wesentlichen dem Innendurchmesser des Wellrohrs (2) entspricht.

3. Vorrichtung (1) nach einem der vorstehenden Ansprüche,
**dadurch gekennzeichnet, dass** das Stützelement (7) ausgebildet ist, um einen Zwischenraum (22) zwischen zwei Rippen (20) des Wellrohrs (2) im Wesentlichen vollständig auszufüllen.

4. Vorrichtung (1) nach einem der vorstehenden Ansprüche,
**dadurch gekennzeichnet, dass** die Dichtungskörper (5a, 5b) und das Stützelement (7) ringscheibenförmig ausgebildet sind.

5. Vorrichtung (1) nach einem der vorstehenden Ansprüche,
**dadurch gekennzeichnet, dass** das Stützelement (7) aus mehreren werkzeugfrei montierbaren Scheibensegmenten (71) ausgebildet ist.

6. Vorrichtung (1) nach einem der vorstehenden Ansprüche,
**dadurch gekennzeichnet, dass** das Stützelement (7) eine Breite im Bereich von 2 mm bis 8 mm, bevorzugt eine Breite von 4 mm, aufweist.

7. Vorrichtung (1) nach einem der vorstehenden Ansprüche,
**dadurch gekennzeichnet, dass** das Material des Stützelements (7) Stahl- oder Edelstahl ist.

8. Vorrichtung (1) nach einem der vorstehenden Ansprüche,
**dadurch gekennzeichnet, dass** die Dichtungskörper (5a, 5b) eine Breite im Bereich von 20 mm bis 80 mm, bevorzugt eine Breite von 40 mm, aufweisen.

9. Vorrichtung (1) nach einem der vorstehenden Ansprüche,
**dadurch gekennzeichnet, dass** die Dichtungskörper (5a, 5b) ein Material aus der Gruppe der Elastomere, insbesondere Gummi, Ethylen-Propylen-Dien-Kautschuk, TPE und / oder PU enthalten.

10. Vorrichtung (1) nach einem der vorstehenden Ansprüche,
**dadurch gekennzeichnet, dass** die Spannelemente (6a, 6b) aus mehreren Ringsegmenten (60) ausgebildet sind.

11. Vorrichtung (1) nach einem der vorstehenden Ansprüche,
**dadurch gekennzeichnet, dass** das erste der Spannelemente (6b) mit mehreren sich axial erstreckenden Verbindungstäben (62) und das zweite der Spannelemente (6a), die Dichtungskörper (5a, 5b) und das Stützelement (7) mit dazu korrespondierenden Bohrungen (54a, 54b, 74, 64) versehen ist.

12. Vorrichtung (1) nach einem der Ansprüche 1 bis 10,
**dadurch gekennzeichnet, dass** die Dichtungskörper (5a, 5b) mittels einer Druckmittelzufuhr verpresbar sind.

13. Vorrichtung (1) nach einem der vorstehenden Ansprüche,
**dadurch gekennzeichnet, dass** die Verbindungsstäbe (61) entlang des Umfangs des Spannelements (6a, 6b) gleichmäßig beabstandet zueinander angeordnet sind.

14. Vorrichtung (1) nach einem der vorstehenden Ansprüche,
**dadurch gekennzeichnet, dass** die Dichtungskörper (5a, 5b) und das Stützelement (7) eine Trennstelle aufweisen und in radialer Richtung aufspreizbar ausgebildet sind.

15. System, mit einer Dichtungsvorrichtung (1) zum Abdichten eines Wellrohrs (2) gegenüber einem Durchbruch (3) in einer Wand (4) nach einem der vorstehenden Ansprüche und einem Wellrohr (2), wobei das Stützelement (7) zwischen zwei Rippen (20) des Wellrohrs angeordnet ist.

## Claims

1. A sealing device (1) for sealing a corrugated pipe (2) passing through a wall (4) relative to a penetration (3) in the wall (4), having
at least two sealing bodies (5a, 5b), each of the sealing bodies (5a, 5b) making contact with ribs (20) of the corrugated pipe (2) in the installed state and being shaped substantially identically to the corrugated pipe (2) in the region of the contact area (53a, 53b) and extending in the axial direction to such an extent that the sealing bodies (5a, 5b) make contact with at least two ribs of the corrugated pipe, and
two clamping elements (6a, 6b) for axially compressing the sealing bodies (5a, 5b),
wherein a support element (7) for resisting compression is disposed between the sealing bodies (5a, 5b) and substantially prevents contact between the sealing bodies (5a, 5b), and
wherein the support element (7) can be disposed between two ribs (20) of the corrugated pipe.

2. The device (1) according to claim 1,
**characterized in that** the support element (7) comprises a cutout for passing through the corrugated pipe, wherein the diameter of the cutout substantially corresponds to the inner diameter of the corrugated pipe (2).

3. The device (1) according to any one of the preceding claims,
**characterized in that** the support element (7) is implemented for substantially completely filling an intermediate space (22) between two ribs (20) of the corrugated pipe (2).

4. The device (1) according to any one of the preceding claims,
**characterized in that** the sealing bodies (5a, 5b) and the support element (7) are ringshaped.

5. The device (1) according to any one of the preceding claims,
**characterized in that** the support element (7) comprises a plurality of disc segments (71) for assembling without tools.

6. The device (1) according to any one of the preceding claims,
**characterized in that** the support element (7) has a width in the range from 2 mm to 8 mm, preferably a width of 4 mm.

7. The device (1) according to any one of the preceding claims,
**characterized in that** the material of the support element (7) is steel or stainless steel.

8. The device (1) according to any one of the preceding claims,
**characterized in that** the sealing bodies (5a, 5b) have a width in the range from 20 mm to 80 mm, preferably a width of 40 mm.

9. The device (1) according to any one of the preceding claims,
**characterized in that** the sealing bodies (5a, 5b) comprise a material from the group of elastomers, particularly rubber, ethylene-propylene-diene rubber, TPE, and/or PU.

10. The device (1) according to any one of the preceding claims,
**characterized in that** the clamping elements (6a, 6b) comprise a plurality of ring segments (60).

11. The device (1) according to any one of the preceding claims,
**characterized in that** the first of the clamping elements (6b) has a plurality of connecting rods (62) extending axially and the second of the clamping elements (6a), the sealing bodies (5a, 5b), and the support element (7) have holes (54a, 54b, 74, 64) corresponding thereto.

12. The device (1) according to any one of the claims 1 through 10,
**characterized in that** the sealing bodies (5a, 5b) can be compressed by means of supplying a means of pressure.

13. The device (1) according to any one of the preceding claims,
**characterized in that** the connecting rods (61) are disposed spaced uniformly apart from each other along the circumference of the clamping element (6a, 6b).

14. The device (1) according to any one of the preceding claims,
**characterized in that** the sealing bodies (5a, 5b) and the support element (7) comprise a separating joint and are implemented for spreading apart in the radial direction.

15. A system having a sealing device (1) for sealing a corrugated pipe (2) relative to a penetration (3) in a wall (4) according to any one of the preceding claims, and having a corrugated pipe (2),
wherein the support element (7) is disposed between two ribs (20) of the corrugated pipe.

## Revendications

1. Dispositif (1) d'étanchéité pour rendre étanche un tube (2) ondulé, traversant un mur (4), vis-à-vis d'un perçage (3) dans le mur (4), comprenant
au moins deux pièces (5a, 5b) d'étanchéité, chaque pièce (5a, 5b) d'étanchéité s'appliquant à l'état monté à des nervures (20) du tube (3) ondulé, étant constituée sensiblement de forme plane dans la région des surfaces (53a, 53b) de contact avec le tube (2) ondulé et s'étendant dans la direction axiale, dans une mesure telle que les pièces (5a, 5b) d'étanchéité s'appliquent à au moins deux nervures du tube ondulé et
deux éléments (6a, 6b) de serrage pour comprimer axialement les pièces (5a, 5b) d'étanchéité,
dans lequel un élément (7) d'appui, résistant à la compression, est disposé entre les pièces (5a, 5b) d'étanchéité et supprime sensiblement le contact entre les pièces (5a, 5b) d'étanchéité et
par lequel l'élément (7) d'appui peut être disposé entre deux nervures (20) du tube ondulé.

2. Dispositif (1) suivant la revendication 1,
**caractérisé en ce que** l'élément (7) d'appui a un évidement pour le passage du tube ondulé, le diamètre de l'évidement correspondant sensiblement au diamètre intérieur du tube (2) ondulé.

3. Dispositif (1) suivant l'une des revendications précédentes,
**caractérisé en ce que** l'élément (7) d'appui est constitué pour remplir, sensiblement complètement, un espace (22) intermédiaire entre deux nervures (20) du tube (2) ondulé.

4. Dispositif (1) suivant l'une des revendications précédentes,
**caractérisé en ce que** les pièces (5a, 5b) d'étanchéité et l'élément (7) d'appui sont constitués sous la forme de disque annulaire.

5. Dispositif (1) suivant l'une des revendications précédentes,
**caractérisé en ce que** l'élément (7) d'appui est constitué de plusieurs segments (71) de disque pouvant être montés sans outil.

6. Dispositif (1) suivant l'une des revendications précédentes,
**caractérisé en ce que** l'élément (7) d'appui a une largeur dans la région de 2 mm à 8 mm, de préférence une largeur de 4 mm.

7. Dispositif (1) suivant l'une des revendications précédentes,
**caractérisé en ce que** le matériau de l'élément (7) d'appui est de l'acier ou de l'acier fin.

8. Dispositif (1) suivant l'une des revendications précédentes,
**caractérisé en ce que** les pièces (5a, 5b) d'étanchéité ont une largeur dans la région de 20 mm à 80 mm, de préférence une largeur de 40 mm.

9. Dispositif (1) suivant l'une des revendications précédentes,
**caractérisé en ce que** les pièces (5a, 5b) d'étanchéité contiennent un matériau du groupe des élastomères, notamment du caoutchouc, du caoutchouc éthylène-propylène-diène, du TPE et/ou du PU.

10. Dispositif (1) suivant l'une des revendications précédentes,
**caractérisé en ce que** les éléments (6a, 6b) de serrage sont constitués de plusieurs segments (60) annulaires.

11. Dispositif (1) suivant l'une des revendications précédentes,
**caractérisé en ce que** le premier des éléments (6b) de serrage est pourvu de plusieurs barreaux (62) de liaison s'étendant axialement et le deuxième des éléments (6a) de serrage, les pièces (5a, 5b) d'étanchéité et l'élément (7) d'appui d'alésages (54a, 54b, 74, 64) y correspondant.

12. Dispositif (1) suivant l'une des revendications précédentes,
**caractérisé en ce que** les pièces (5a, 5b) d'étanchéité peuvent être comprimées au moyen d'un apport d'un moyen d'application d'une pression.

13. Dispositif (1) suivant l'une des revendications précédentes,
**caractérisé en ce que** les barreaux (61) de liaison sont disposés en étant à une distance uniforme les uns des autres sur le pourtour de l'élément (6a, 6b) de serrage.

14. Dispositif (1) suivant l'une des revendications précédentes,
**caractérisé en ce que** les pièces (5a, 5b) d'étanchéité et l'élément (7) d'appui ont un point de séparation et sont constitués de manière à pouvoir être écartés dans la direction radiale.

15. Système comprenant un dispositif (1) d'étanchéité pour rendre étanche un tube (2) ondulé vis-à-vis d'un perçage (3) dans un mur (4) suivant l'une des revendications précédentes et un tube (2) ondulé,
dans lequel l'élément (7) d'appui est disposé entre deux nervures (20) du tube ondulé.
